# FASCICULE DE BREVET EUROPEEN

(11) **EP 3 583 491 B1**
(45) Date de publication et mention de la délivrance du brevet: **01.09.2021**
(21) Numéro de dépôt: 18704032.4
(22) Date de dépôt: 14.02.2018
(51) Int. Cl.: G06F 3/02, G06F 3/044

(54) **MODULE DE COMMANDE POUR HABITACLE DE VÉHICULE**
KOMMANDOMODUL FÜR FAHRZEUGKABINE
COMMAND MODULE FOR VEHICLE CABIN

(30) Priorité: 16.02.2017 FR 1751250
(43) Date de publication de la demande: 25.12.2019
(73) Titulaire: DAV, 94046 Créteil Cedex (FR)
(72) Inventeur: HUYNH, Tan-Duc, 94046 Créteil Cedex (FR)
(74) Mandataire: Delplanque, Arnaud
(86) Numéro de dépôt international: PCT/EP2018/053729
(87) Numéro de publication internationale: WO 2018/149897

(56) Documents cités:
- FR-A1- 2 910 744
- JP-A- 2010 257 046
- US-A1- 2007 165 002
- US-A1- 2008 143 671
- US-A1- 2010 289 759
- US-A1- 2015 355 819

## Description

La présente invention concerne un module de commande tel qu'utilisé pour contrôler et régler des fonctions diverses, et en particulier pour un habitacle de véhicule tel que défini par la revendication 1, et un procédé de détection de l'actionnement d'une touche de module de commande tel que défini par la revendication 7.

Dans les habitacles de véhicules, la multiplication des fonctions à contrôler telles que la climatisation, l'autoradio, les systèmes de navigation, a conduit à une multiplication des modules de commandes et des modules d'affichage associés, comme les boutons et molettes.

Un mode de réalisation de ces modules de commande est sous forme de surface à touches capacitives. Une telle surface à touches capacitives comporte une surface généralement plane en plastique dur (polycarbonate PC ou polyméthylméthacrylate PMMA), sur laquelle sont matérialisées des touches, par peinture, gravure ou moulage de motifs signalétiques.

À chaque touche est associée une électrode capacitive disposée sous la couche plane en plastique dur. Ces électrodes capacitives émettent un champ électrique qui est perturbé par l'approche d'un doigt ou de la main d'un utilisateur formant une électrode complémentaire par contact électrique avec la masse (châssis du véhicule).

Cette perturbation est enregistrée, et, lorsqu'un seuil est atteint, un actionnement de la touche correspondant à l'électrode considérée est pris en compte par une unité de contrôle qui déclenche alors une modification (mise en marche, arrêt, adaptation de puissance) du fonctionnement d'un module fonctionnel (climatisation, lecteur multimédia, module d'éclairage interne ou externe) du véhicule.

Pour intégrer de plus nombreuses touches sur une même surface à touches capacitives, une réduction de taille des électrodes et une disposition proche les unes des autres est adoptée. Cependant, les espaces de détection de chacune des électrodes se recoupent alors de façon plus importante, de sorte qu'une différenciation de l'électrode activée devient plus difficile voire impossible. Pour actionner une touche spécifique, l'utilisateur, qui est souvent le conducteur du véhicule, devra veiller à bien toucher la touche correspondante au milieu de sa surface, ce qui implique qu'il détourne son attention de la conduite.

Il est possible d'augmenter les seuils de détection ou de diminuer le champs électrique généré par chaque électrode pour réduire leurs espaces de détection respectifs et dont leur recouvrement, mais cela diminue la sensibilité globale du dispositif, obligeant par exemple les constructeurs à réduire l'épaisseur de la couche en plastique dur, qui est alors d'autant plus fragile.

En alternative, les électrodes doivent être espacées davantage, ce qui augmente la taille finale du module de commande obtenu.

Afin de résoudre au moins partiellement le problème précédemment mentionné, l'invention a pour objet un module de commande, en particulier pour habitacle de véhicule, comportant au moins deux capteurs adjacents, configurés pour émettre un signal variable avec la proximité d'une partie du corps d'un utilisateur s'approchant pour interagir avec des touches correspondant aux capteurs adjacents, lesdits capteurs étant des électrodes capacitives, disposés sur une surface d'affichage du module de commande, et une unité de contrôle reliée aux capteurs adjacents, caractérisé en ce que l'unité de contrôle est configurée pour :
∘ isoler le signal de valeur la plus haute issu des différents capteurs adjacents,
∘ comparer les différences entre le signal de valeur la plus haute et chacun des autres signaux avec une valeur de référence basse,

Les modules de commande ainsi obtenus peuvent être réduits en taille à taux de fausses détections comparables, ou bien présenter un meilleur taux de détection d'actionnement sans erreur à taille comparable.

L'unité de contrôle est en outre configurée pour :
∘ comparer la différence entre le signal de plus haute valeur et chacun des autres signaux à une valeur de référence haute supérieure à ladite une valeur de référence basse,
∘ prendre en compte un actionnement de la touche correspondant au capteur émettant le signal de valeur la plus haute si les différences entre le signal de valeur la plus haute et chacun des autres signaux sont plus grandes que la valeur de référence basse et au moins une des différences est inférieure à la valeur de référence haute.

Le module peut en outre comporter une ou plusieurs des caractéristiques suivantes, prises seules ou en combinaison.

Il comporte quatre capteurs disposés en croix, correspondant aux quatre touches d'une croix directionnelle.

Les électrodes comportent des bords adjacents présentant des protubérances et des creux complémentaires et imbriqués.

Les protubérances et les creux complémentaires sont des dents de scie en quinconce.

Il comporte un dispositif de rétroéclairage, et la surface d'affichage comporte une plaque dans laquelle sont réalisés des motifs translucides ou transparents, et les électrodes comportent des perçages pour laisser passer une portion de la lumière issue du dispositif de rétroéclairage à travers la plaque vers les motifs translucides ou transparents.

L'invention a aussi pour objet le procédé associé de détection de l'actionnement d'une touche de module de commande tel que défini par la revendication 7.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un module de commande dans un habitacle,
- la figure 2 montre schématiquement un module de commande en éclaté partiel en vue de dessus,
- la figure 3 est un organigramme reprenant les principales étapes du procédé de prise en compte d'un actionnement d'une touche du module de commande,
- les figures 4a, 4b illustrent l'appui d'un utilisateur sur une des touches du module de commande, avec le graphe reprenant les valeurs de changement de capacité en découlant,
- les figures 5a, 5b illustrent l'appui d'un utilisateur hors des touches du module de commande, avec le graphe reprenant les valeurs de changement de capacité en découlant.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Les termes « premier », « deuxième » etc. sont donnés ici pour distinguer entre eux des éléments ayant une fonction semblable. Ils ne servent donc qu'à référencer les éléments sans ordre de préférence particulière. En particulier, les objets désignés comme « premier », « deuxième » et équivalents peuvent être interchangés sans dévier du concept de l'invention.

Le module de commande 100 est installé dans la portière latérale, ici conducteur, du véhicule : au niveau de l'accoudoir, portant en particulier la poignée de la portière. Cet emplacement permet au conducteur, qui est ici l'utilisateur du module de commande 100, d'interagir aisément avec le module de commande 100 tout en l'ayant en périphérie de son champ de vision en situation normale de conduite.

Un tel module de commande 100 permet la commande d'au moins une fonction d'un organe du véhicule automobile tel que le réglage de l'inclinaison d'un rétroviseur extérieur R, les commandes de lève-vitres, ou encore pour le déplacement de sièges motorisés ou pour commander des lumières intérieures, un verrouillage central, un toit ouvrant, les feux de détresse, les lumières d'ambiance ou le frein à main. Le module de commande 1 peut également servir pour la commande des fonctions d'un système de climatisation, d'un système audio, d'un système de téléphonie ou encore d'un système de navigation.

En alternative, le module de commande 100 peut être disposé au niveau de la console centrale du véhicule : la surface verticale ou inclinée située entre le conducteur et le passager.

Le module de commande 100 présente à l'utilisateur, à l'état monté, une surface frontale S réalisée sous forme de plaque en matériau plastique, qui recouvre ledit module 100 et sur laquelle l'utilisateur appuie un doigt lorsqu'il veut interagir avec les modules du véhicule contrôlés par le module de commande 100. La surface frontale S permet de définir au moins localement une normale dirigée vers l'utilisateur U. Les termes tels que « au-dessus », « au-dessous », « sur », « sous » et équivalents utilisés ci-après sont définis en utilisant cette normale comme référence.

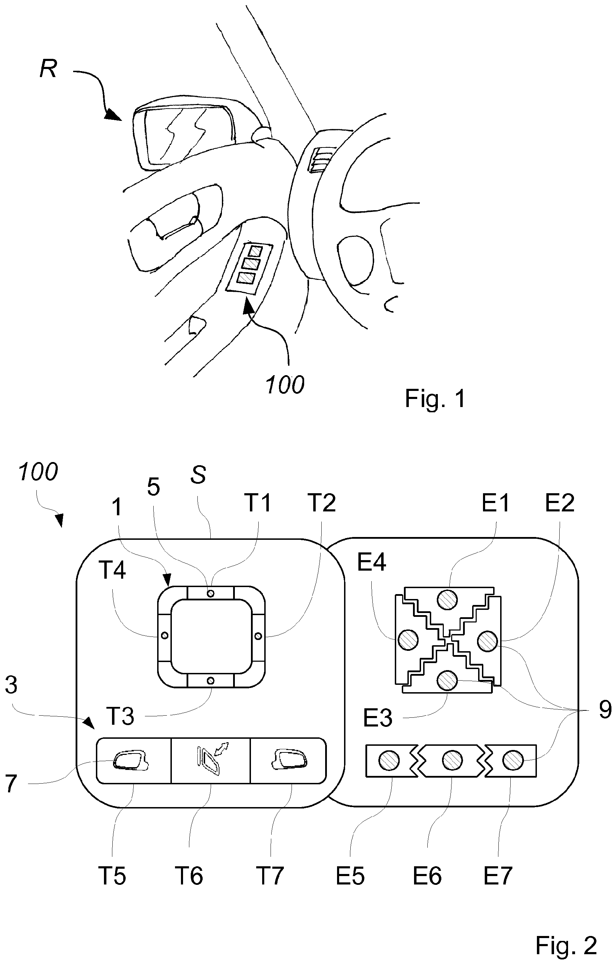

Le module de commande 100 est représenté plus en détail en figure 2.

La figure 2 montre le module de commande 100 en vue de dessus, avec sa surface frontale *S* translatée sur le côté gauche pour permettre de voir les éléments situés en dessous.

La surface frontale *S* est réalisée sous forme de plaque de matériau plastique, qui forme un couvercle pour le module de commande 100. Le plastique utilisé est par exemple transparent ou translucide, avec une couche de peinture sombre et opaque sur la face supérieure. La plaque en matériau plastique est typiquement d'une épaisseur de quelques millimètres, par exemple de deux à quatre millimètres.

La surface frontale *S* comporte des touches T1 à T7, réparties en deux ensembles de touches 1, 3.

Le premier ensemble de touches 1 comporte quatre touches T1, T2, T3, T4 réparties sur les côtés d'un carré, de sorte à former une « croix directionnelle », par exemple pour contrôler l'inclinaison d'un rétroviseur *R* latéral du véhicule dans les quatre directions haut, bas, gauche, droite.

Le deuxième ensemble de touches 3 comporte trois touches alignées T5, T6, T7, qui complètent le module de commande 100. Dans le cadre d'un module de commande 100 pour rétroviseurs *R,* lesdites trois touches T5, T6, T7 correspondent respectivement à : contrôle de l'inclinaison du rétroviseur gauche (T5), escamoter/déployer les rétroviseurs (T6) et contrôle de l'inclinaison du rétroviseur droit (T7).

En appuyant sur la touche T5 ou T7, l'utilisateur choisit quel rétroviseur incliner au moyen de la croix directionnelle du premier ensemble de touches 1. En appuyant sur la touche T6, l'utilisateur déclenche une mise en position escamotée ou déployée des rétroviseurs, par exemple en les baissant ou en les relevant, de sorte qu'en position escamotée, les rétroviseurs sont au plus près de la carrosserie. La position escamotée est en particulier indiquée lorsque le véhicule est à l'arrêt ou en stationnement, pour éviter que les rétroviseurs ne soient heurtés par un cycliste ou un piéton en bord de route ou bien par un chariot de supermarché sur un parking.

Les touches T1 à T4 du premier ensemble 1 comportent des motifs lumineux 5, ici des cercles, rétroéclairés par un dispositif de rétroéclairage (non représenté), qui comporte par exemple une ou plusieurs diodes électroluminescentes et des guides de lumière qui acheminent et conditionnent la lumière jusqu'aux motifs lumineux 5. Les motifs lumineux sont par exemple réalisés au moyen d'une portion de plastique transparent ou translucide, recouvert d'un film de peinture ou de matériau opaque dans lequel le motif lumineux est gravé, découpé ou détouré.

Les touches T5 à T7 du deuxième ensemble 3 comportent des pictogrammes 7, représentant la fonction des touches T5 à T7, ici respectivement un rétroviseur gauche, un rétroviseur escamoté, et un rétroviseur droit. Les pictogrammes 7 peuvent en particulier être rétroéclairés par le dispositif de rétroéclairage, auquel cas ils sont aussi réalisés au moyen d'une portion de plastique transparent ou translucide, recouvert d'un film de peinture ou de matériau opaque dans lequel le motif correspondant est gravé, découpé ou détouré.

Les touches T1 à T7 sont en particulier matérialisées par des creux ou bosses dans la surface frontale *S*, qui permettent à l'utilisateur de trouver et reconnaître les touches T1 à T7 dans le noir ou bien sans détourner son attention, en particulier son regard, de la circulation.

Sous la surface frontale S sont disposées des électrodes E1 à E7, correspondant aux touches T1 à T7. Ces électrodes E1 à E7 sont par exemple des électrodes auto-capacité (« self capacitance »), à la fois émettrices et réceptrices du signal capacitif, et dont la capacité change à l'approche du doigt de l'utilisateur lorsqu'il vient appuyer sur une des touches T1 à T7, le changement de capacité servant à quantifier l'approche du doigt de l'utilisateur. La disposition et les formes des électrodes E1 à E7 correspondent à celles des touches T1 à T7.

En particulier, les espaces de détection des différentes électrodes E1 à E7 se recouvrent partiellement, du fait de leur disposition : un utilisateur appuyant, par exemple sur la touche T2, en approchant son doigt de l'électrode E2, déclenche l'émission par ladite électrode E2 d'un signal capacitif S2. Cependant, en s'approchant de l'électrode E2, le doigt de l'utilisateur est aussi assez proche des électrodes adjacentes E1 et E3, qui émettent alors un signal capacitif S1, S3 de moindre valeur.

Les électrodes E1 à E7 sont reliées à une unité de contrôle, non représentée, qui comporte en particulier une mémoire électronique et des moyens de calculs, dédiés ou bien éventuellement partagés dans un réseau électronique ou informatique global du véhicule. L'unité de contrôle actionne ou modifie en particulier une ou plusieurs fonctions ou organes du véhicule, en particulier au moyen de transistors. Cette unité de contrôle est soit dédiée soit intégrée dans un circuit électrique global du véhicule.

Les électrodes E1 à E4, correspondant à la croix directionnelle 1, sont réalisées sous forme de triangles rectangles isocèles, de grand côté environ égal à 20mm, ayant leur sommet à angle droit dirigé vers le centre, de sorte à couvrir l'espace carré correspondant aux touches de la croix directionnelle 1.

Les électrodes E5 à E7, correspondant à la ligne 3 de touches T5 à T7, sont réalisées sous forme de rectangles alignés.

Pour augmenter le recouvrement des espaces de détection entre les électrodes adjacentes, les bords des électrodes E1 à E7 qui se font face comportent des creux et des bosses de forme complémentaire et imbriqués, ici réalisés sous forme de dents de scie en quinconce.

Pour les électrodes E1 à E4 formant la croix directionnelle, les côtés égaux des triangles isocèles comportent des dents de scie. Pour les électrodes E5 à E7, alignées horizontalement en figure 2, les bords verticaux des électrodes E5 à E7 entre deux électrodes adjacentes comportent des dents de scie en quinconce complémentaires.

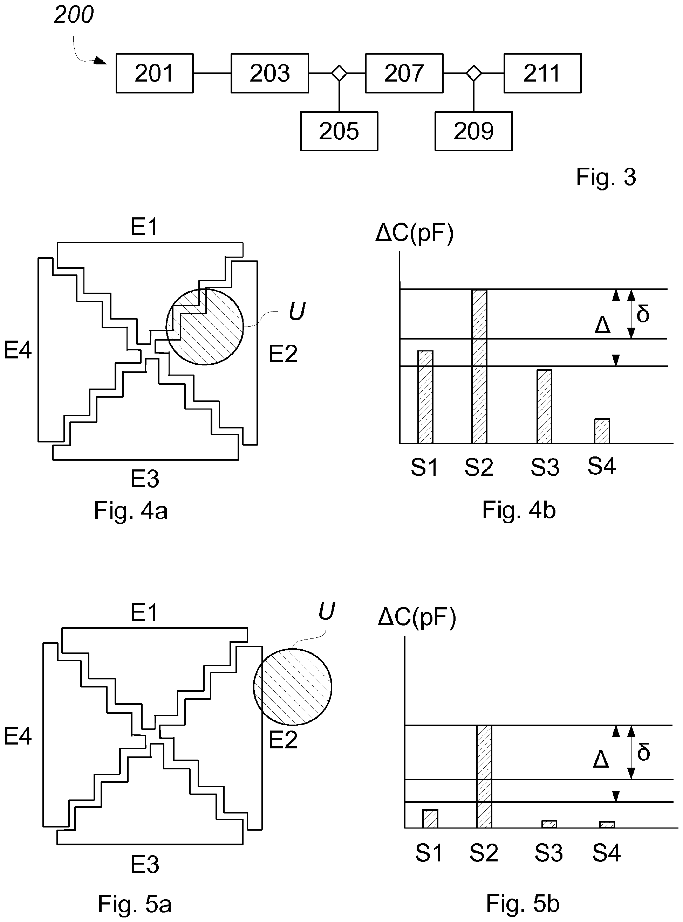

La figure 3 est un organigramme illustrant la méthode de détection et de validation selon un mode de réalisation particulier de l'invention. L'organigramme de la figure 3 reprend les principales étapes du procédé 200 de détection de l'actionnement d'une touche T1 à T7 du module de commande 100.

La figure 3 est décrite ci-après avec des références aux figures 4a, 4b, 5a et 5b.

La figure 4a illustre un cas de figure où un utilisateur U appuie de la pointe du doigt sur la touche T2 située au dessus de l'électrode E2. L'utilisateur *U* est représenté schématiquement par la surface d'appui circulaire de la pointe de son doigt.

Du fait de la forme et de la proximité des électrodes E1 et E2, et d'un appui de l'utilisateur *U* qui n'est pas parfaitement centré, la surface d'appui déborde sur l'électrode E1, bien qu'elle soit principalement centrée sur l'électrode E2 correspondant à la touche T2 que l'utilisateur *U* souhaite actionner.

La figure 4b est un diagramme en bâtons illustrant les différents signaux S1, S2, S3 et S4 respectivement issus des électrodes E1, E2, E3 et E4. En particulier, les signaux S1 à S4 sont une variation de capacité électrique AC en picofarads (pF) mesurée entre les électrodes E1 à E4 et la masse (à laquelle est reliée l'utilisateur) lors de l'approche de la pointe du doigt de l'utilisateur *U* qui forme alors l'électrode complémentaire.

Lors de la première étape 201 du procédé 200, l'unité de contrôle isole l'électrode émettant le signal de plus haute valeur, ici l'électrode E2.

Lors de la deuxième étape 203, l'unité de contrôle calcule la différence entre le signal S2 de plus haute valeur et la valeur de chacun des autres signaux S1, S3 et S4, c'est-à-dire S2-S1, S2-S3 et S2-S4. Ces différences sont ensuite comparées à une valeur de référence basse δ.

Si au moins une des différences S2-S1, S2-S3 ou S2-S4 est inférieure à la valeur de référence basse δ, l'unité de contrôle interprète à l'étape 205 le changement de capacité mesuré comme n'étant pas un actionnement par l'utilisateur d'une touche T1, T2, T3 ou T4 et ne modifie donc pas le fonctionnement des modules fonctionnels du véhicule contrôlé par les touches T1 à T4.

Si aucune des différences S2-S1, S2-S3 ou S2-S4 est inférieure à la valeur de référence basse δ, l'unité de contrôle valide à l'étape 207 le changement de capacité mesuré comme étant un actionnement par l'utilisateur de la touche T2 correspondant à l'électrode E2 ayant émis le signal S2 de plus haute valeur. L'unité de contrôle déclenche alors la modification des modules fonctionnels du véhicule contrôlés par la touche T2 correspondant au signal S2 de plus haute valeur

L'utilisation de cette valeur de référence basse δ permet d'utiliser les variations relatives de capacité des électrodes E1 à E7 plutôt qu'une valeur de référence absolue, qui est généralement difficile à déterminer, et varie grandement avec le temps et les conditions dans l'habitacle. La valeur zéro (0) des signaux S1 à S7 correspondant aux électrodes E1 à E7 peut être recalculée de façon dynamique et périodique, en prenant comme référence la valeur mesurée en l'absence d'actionnement (changements de capacité inférieurs à une valeur mémorisée entre deux évaluations).

Lorsque toutes les différences S2-S1, S2-S3 ou S2-S4 sont supérieures à la valeur de référence basse δ, cela signifie qu'une des électrodes (E2, celle émettant S2 le signal de plus haute valeur) a subi un changement de capacité significatif par rapport aux autres E1, E3, E4, et donc qu'elle est la seule de laquelle un doigt de l'utilisateur *U* s'approche.

Si au moins une des différences S2-S1, S2-S3 ou S2-S4 est inférieure à la valeur de référence basse δ, cela signifie qu'au moins deux électrodes ont subi un changement de capacité d'amplitude comparable. Cela correspond par exemple à une modification de l'environnement autour des électrodes E1 à E7 ou bien à l'approche d'un objet, doigt de l'utilisateur ou autre (main, coude, vêtement), soit entre deux électrodes adjacentes, soit avec des dimensions qui font que plusieurs des électrodes E1 à E7 sont approchées à la fois. Les valeurs mesurées peuvent alors être utilisées comme valeur zéro à l'itération suivante du procédé 200.

Le fait que l'unité de contrôle écarte les cas de figure où au moins une des différences S2-S1, S2-S3 ou S2-S4 est inférieure à la valeur de référence basse δ permet ainsi de diminuer le nombre de fausses détections, en ce que seul un doigt s'approchant de façon significativement centrée sur une seule électrode E1 à E4 déclenche une prise en compte d'un actionnement par l'unité de contrôle.

Le procédé 200 représenté en figure 3 prévoit en outre, à l'étape 207 atteinte en l'absence de différence de valeurs de signaux S2-S1, S2-S3 et S3-S4 inférieures à la valeur de référence basse δ, de comparer les différences S2-S1, S2-S3 ou S2-S4 à une valeur de référence haute Δ.

Si aucune des différences S2-S1, S2-S3 et S3-S4 n'est inférieure à la valeur de référence haute Δ, l'unité de contrôle rejette à l'étape 209 le changement de capacité comme étant déclenché par un appui hors zone, comme illustré en figure 5a, avec en figure 5b le diagramme en bâtons des signaux S1, S2, S3, S4 correspondant.

En figure 5a sont représentées les quatre électrodes E1 à E4 de la croix directionnelle des figures précédentes, avec la zone d'appui circulaire *U* représentant l'utilisateur appuyant la pointe de son doigt à droite de l'électrode E2 la plus à droite figure 5a (appui hors zone).

En particulier, puisque l'utilisateur *U* appuie à la droite de l'électrode E2, les autres électrodes E1, E3, E4 ne voient leur capacité changer que d'une valeur inférieure à celle mesurée dans le cas d'un appui sur la croix directionnelle 1 comme en figure 4a. Puisque les électrodes E1 à E4 sont formées et disposées de sorte à présenter des espaces de détection avec un recouvrement au moins partiel, l'appui sur la zone recouverte par une des électrodes E1 à E4 déclenche une modification de la capacité des électrodes voisines.

Cet effet de changement de capacité des électrodes directement adjacentes est renforcé par la présence des creux et bosses complémentaires et imbriqués des bords des électrodes E1 à E4 et E5 à E7 d'un même ensemble de touches 1, 3.

Si au moins une des différences S2-S1, S2-S3 et S3-S4 est inférieure à la valeur de référence haute Δ, correspondant au cas des figures 4a et 4b, l'unité de contrôle valide à l'étape 211 les changements de capacité mesurés comme étant un actionnement par l'utilisateur de la touche T2 correspondant à l'électrode E2 émettant le signal S2 de plus haute valeur.

Les valeurs de référence haute Δ et basse δ sont par exemple enregistrées dans la mémoire de l'unité de contrôle, et sont déterminées et/ou ajustées lors de la conception du module de commande 100 et lors de son installation dans l'habitacle pour paramétrer la sensibilité de détection tout en écartant les appuis hors zone.

Le procédé 200 et le module de commande 100 associé permettent donc de détecter de façon fiable les appuis du doigt d'un utilisateur *U* sur une des touches T1 à T7 sans avoir recours à des mesures absolues de capacité d'électrodes E1 à E7 correspondant aux touches T1 à T7.

Il permet en outre d'écarter les appuis hors-zone de façon fiable à partir des même valeurs mesurées et mémorisées de capacité des différentes électrodes E1 à E7.

Le module de commande 100, et les surfaces associées aux touches T1 à T7 peuvent en outre être réduits, avec des électrodes rapprochées, puisque le recouvrement des différents espaces de détection de chacune des électrodes E1 à E7 n'est plus à écarter pour éviter une codépendance des capacités d'électrodes voisines à l'approche du doigt ou de la main de l'utilisateur *U.*

## Revendications

1. Module de commande, en particulier pour habitacle de véhicule, comportant au moins deux capteurs (E1, E2, E3, E4) adjacents, configurés pour émettre un signal (S1, S2, S3, S4) variable avec la proximité d'une partie du corps d'un utilisateur (*U*) s'approchant pour interagir avec des touches (T1, T2, T3, T4) correspondant aux capteurs (E1, E2, E3, E4) adjacents, disposés sur une surface d'affichage (*S*) du module de commande, lesdits capteurs (E1, E2, E3, E4) étant des électrodes capacitives, et une unité de contrôle reliée aux capteurs (E1, E2, E3, E4) adjacents configurée pour :
∘ isoler le signal (S2) de valeur la plus haute issu des différents capteurs (E1, E2, E3, E4) adjacents,
l'unité de contrôle étant en outre configurée pour :
∘ comparer les différences (S2-S 1, S2-S3, S2-S4) entre le signal (S2) de valeur la plus haute et chacun des autres signaux (S1, S3, S4) avec une valeur de référence basse (δ),
∘ comparer la différence (S2-S1, S2-S3, S2-S4) entre le signal (S2) de plus haute valeur et chacun des autres signaux (S1, S3, S4) à une valeur de référence haute (Δ) supérieure à ladite une valeur de référence basse (δ),
∘ prendre en compte un actionnement de la touche (T2) correspondant au capteur (E2) émettant le signal (S2) de valeur la plus haute si les différences (S2-S1, S2-S3, S2-S4) entre le signal (S2) de valeur la plus haute et chacun des autres signaux (S1, S3, S4) sont plus grandes que la valeur de référence basse (δ) et au moins une des différences est inférieure à la valeur de référence haute (Δ).

2. Module de commande selon la revendication précédente, **caractérisé en ce qu'**il comporte quatre capteurs (E1, E2, E3, E4) disposés en croix, correspondant aux quatre touches (T1, T2, T3, T4) d'une croix directionnelle.

3. Module de commande selon l'une des revendications précédentes, **caractérisé en ce que** les capteurs sont des électrodes auto-capacité.

4. Module de commande selon l'une des revendications 2 ou 3, **caractérisé en ce que** les électrodes comportent des bords adjacents présentant des protubérances et des creux complémentaires et imbriqués.

5. Module de commande selon la revendication précédente, **caractérisé en ce que** les protubérances et les creux complémentaires sont des dents de scie en quinconce.

6. Module de commande selon l'une des revendications 2 à 5, **caractérisé en ce qu'**il comporte un dispositif de rétroéclairage, **en ce que** la surface d'affichage (S) comporte une plaque dans laquelle sont réalisés des motifs (5, 7) translucides ou transparents, et **en ce que** les électrodes (E1 à E7) comportent des perçages (9) pour laisser passer une portion de la lumière issue du dispositif de rétroéclairage à travers la plaque vers les motifs (5, 7) translucides ou transparents.

7. Procédé de détection de l'actionnement d'une touche de module de commande, en particulier pour habitacle de véhicule et comportant au moins deux capteurs (Elà E7) adjacents, configurés pour émettre un signal (S1, S2, S3, S4) variable avec la proximité d'une partie du corps d'un utilisateur (*U*) s'approchant pour interagir avec des touches (T1 à T7) correspondant aux capteurs (E1 à E7) adjacents lesdits capteurs (E1, E2, E3, E4) étant des électrodes capacitives, ledit procédé comportant l'étape de :
∘ isoler le signal (S2) de valeur la plus haute issu des différents capteurs (E1, E2, E3, E4) adjacents,
et étant **caractérisé en ce qu'**il comporte en outre les étapes :
∘ comparer les différences (S2-S1, S2-S3, S2-S4) entre le signal (S2) de valeur la plus haute et chacun des autres signaux (S1, S3, S4) avec une valeur de référence basse (δ),
∘ comparer la différence (S2-S1, S2-S3, S2-S4) entre le signal (S2) de plus haute valeur et chacun des autres signaux (S1, S3, S4) à une valeur de référence haute (Δ),
∘ prendre en compte un actionnement de la touche (T2) correspondant au capteur (E2) émettant le signal (S2) de valeur la plus haute si les différences (S2-S1, S2-S3, S2-S4) entre le signal (S2) de valeur la plus haute et chacun des autres signaux (S1, S3, S4) sont plus grandes que la valeur de référence basse (δ) et au moins une des différences est inférieure à la valeur de référence haute (Δ).

## Patentansprüche

1. Bedienmodul, insbesondere für eine Fahrzeugfahrgastzelle, umfassend mindestens zwei benachbarte Sensoren (E1, E2, E3, E4), die dazu ausgelegt sind, ein Signal (S1, S2, S3, S4) auszusenden, das mit der Nähe eines Körperteils eines Nutzers (*U*) veränderlich ist, der sich nähert, um mit Tasten (T1, T2, T3, T4) zu interagieren, die den benachbarten Sensoren (E1, E2, E3, E4) entsprechen, die auf einer Anzeigefläche (S) des Bedienmoduls angeordnet sind, wobei die Sensoren (E1, E2, E3, E4) kapazitive Elektroden sind, und eine mit den benachbarten Sensoren (E1, E2, E3, E4) verbundene Steuerungseinheit, die dazu ausgelegt ist:
- das Signal (S2) mit dem höchsten Wert, das aus den verschiedenen benachbarten Sensoren (E1, E2, E3, E4) stammt, zu isolieren,
wobei die Steuerungseinheit ferner dazu ausgelegt ist:
- die Differenzen (S2-S1, S2-S3, S2-S4) zwischen dem Signal (S2) mit dem höchsten Wert und jedem der anderen Signale (S1, S3, S4) mit einem unteren Referenzwert (δ) zu vergleichen,
- die Differenz (S2-S1, S2-S3, S2-S4) zwischen dem Signal (S2) mit dem höchsten Wert und jedem der anderen Signale (S1, S3, S4) mit einem oberen Referenzwert (Δ) zu vergleichen, der größer als der untere Referenzwert (δ) ist,
- eine Betätigung der Taste (T2), die dem Sensor (E2) entspricht, der das Signal (S2) mit dem höchsten Wert aussendet, zu berücksichtigen, wenn die Differenzen (S2-S1, S2-S3, S2-S4) zwischen dem Signal (S2) mit dem höchsten Wert und jedem der anderen Signale (S1, S3, S4) größer als der untere Referenzwert (δ) sind und mindestens eine der Differenzen kleiner als der obere Referenzwert (Δ) ist.

2. Bedienmodul nach dem vorhergehenden Anspruch, **dadurch gekennzeichnet, dass** es vier kreuzweise angeordnete Sensoren (E1, E2, E3, E4) umfasst, die den vier Tasten (T1, T2, T3, T4) eines Steuerkreuzes entsprechen.

3. Bedienmodul nach einem der vorangehenden Ansprüche, **dadurch gekennzeichnet, dass** die Sensoren Eigenkapazitätselektroden sind.

4. Bedienmodul nach einem der Ansprüche 2 oder 3, **dadurch gekennzeichnet, dass** die Elektroden benachbarte Ränder umfassen, die Erhebungen und komplementär ausgebildete und verschachtelte Vertiefungen aufweisen.

5. Bedienmodul nach dem vorhergehenden Anspruch, **dadurch gekennzeichnet, dass** die Erhebungen und die komplementär ausgebildeten Vertiefungen versetzt angeordnete Sägezähne sind.

6. Bedienmodul nach einem der Ansprüche 2 bis 5, **dadurch gekennzeichnet, dass** es eine Hinterleuchtungsvorrichtung umfasst, dass die Anzeigefläche (S) eine Platte umfasst, in der transluzente oder transparente Muster (5, 7) ausgeführt sind, und dass die Elektroden (E1 bis E7) Bohrungen (9) umfassen, um einen Anteil des aus der Hinterleuchtungsvorrichtung stammenden Lichts durch die Platte hindurch zu den transluzenten oder transparenten Mustern (5, 7) durchzulassen.

7. Verfahren zur Detektion der Betätigung einer Bedienmodultaste, insbesondere für eine Fahrzeugfahrgastzelle, umfassend mindestens zwei benachbarte Sensoren (E1 bis E7), die dazu ausgelegt sind, ein Signal (S1, S2, S3, S4) auszusenden, das mit der Nähe eines Körperteils eines Nutzers (*U*) veränderlich ist, der sich nähert, um mit Tasten (T1 bis T7) zu interagieren, die den benachbarten Sensoren (E1 bis E7) entsprechen, wobei die Sensoren (E1, E2, E3, E4) kapazitive Elektroden sind, wobei das Verfahren den Schritt umfasst:
- das Signal (S2) mit dem höchsten Wert, das aus den verschiedenen benachbarten Sensoren (E1, E2, E3, E4) stammt, zu isolieren,
und **dadurch gekennzeichnet ist, dass** es ferner die Schritte umfasst:
- die Differenzen (S2-S1, S2-S3, S2-S4) zwischen dem Signal (S2) mit dem höchsten Wert und jedem der anderen Signale (S1, S3, S4) mit einem unteren Referenzwert (δ) zu vergleichen,
- die Differenz (S2-S1, S2-S3, S2-S4) zwischen dem Signal (S2) mit dem höchsten Wert und jedem der anderen Signale (S1, S3, S4) mit einem oberen Referenzwert (Δ) zu vergleichen,
- eine Betätigung der Taste (T2), die dem Sensor (E2) entspricht, der das Signal (S2) mit dem höchsten Wert aussendet, zu berücksichtigen, wenn die Differenzen (S2-S1, S2-S3, S2-S4) zwischen dem Signal (S2) mit dem höchsten Wert und jedem der anderen Signale (S1, S3, S4) größer als der untere Referenzwert (δ) sind und mindestens eine der Differenzen kleiner als der obere Referenzwert (Δ) ist.

## Claims

1. Control module, in particular for a vehicle passenger compartment, said module comprising at least two adjacent sensors (E1, E2, E3, E4) configured to emit a signal (S1, S2, S3, S4) that varies with the proximity of a part of the body of a user (*U*) as it is moved closer with a view to interacting with buttons (T1, T2, T3, T4) corresponding to the adjacent sensors (E1, E2, E3, E4), which are placed on a display area (*S*) of the control module, said sensors (E1, E2, E3, E4) being capacitive electrodes, and a control unit connected to the adjacent sensors (E1, E2, E3, E4) and configured to:
o isolate the signal (S2) of highest value output from the various adjacent sensors (E1, E2, E3, E4),
the control unit further being configured to:
o compare the differences (S2-S1, S2-S3, S2-S4) between the signal (S2) of highest value and each of the other signals (S1, S3, S4) with a low reference value (δ),
o compare the difference (S2-S1, S2-S3, S2-S4) between the signal (S2) of highest value and each of the other signals (S1, S3, S4) with a high reference value (Δ) above said a low reference value (δ),
o take into account an actuation of the button (T2) corresponding to the sensor (E2) emitting the signal (S2) of highest value if the differences (S2-S1, S2-S3, S2-S4) between the signal (S2) of highest value and each of the other signals (S1, S3, S4) are greater than the low reference value (δ) and at least one of the differences is less than the high reference value (Δ).

2. Control module according to the preceding claim, **characterized in that** it comprises four sensors (E1, E2, E3, E4) arranged in a cross, said four sensors corresponding to the four buttons (T1, T2, T3, T4) of a D-pad.

3. Control module according to either of the preceding claims, **characterized in that** the sensors are self-capacitance electrodes.

4. Control module according to either of Claims 2 and 3, **characterized in that** the electrodes comprise adjacent edges exhibiting protuberances and complementary recesses into which the protuberances fit.

5. Control module according to the preceding claim, **characterized in that** the protuberances and complementary recesses are staggered saw teeth.

6. Control module according to one of Claims 2 to 5, **characterized in that** it comprises a backlighting device, **in that** the display area (S) comprises a panel in which are produced translucent or transparent patterns (5, 7), and **in that** the electrodes (E1 to E7) comprise holes (9) in order to let an amount of the light generated by the backlighting device pass through the panel toward the translucent or transparent patterns (5, 7).

7. Method for detecting the actuation of a button of a control module, in particular for a vehicle passenger compartment and comprising at least two adjacent sensors (E1 to E7) configured to emit a signal (S1, S2, S3, S4) that varies with the proximity of a part of the body of a user (*U*) as it is moved closer with a view to interacting with buttons (T1 to T7) corresponding to the adjacent sensors (E1 to E7), said sensors (E1, E2, E3, E4) being capacitive electrodes, said method comprising the step of:
o isolating the signal (S2) of highest value output from the various adjacent sensors (E1, E2, E3, E4), and being **characterized in that** it further comprises the steps:
o comparing the differences (S2-S1, S2-S3, S2-S4) between the signal (S2) of highest value and each of the other signals (S1, S3, S4) with a low reference value (δ),
o comparing the difference (S2-S1, S2-S3, S2-S4) between the signal (S2) of highest value and each of the other signals (S1, S3, S4) with a high reference value (Δ),
o taking into account an actuation of the button (T2) corresponding to the sensor (E2) emitting the signal (S2) of highest value if the differences (S2-S1, S2-S3, S2-S4) between the signal (S2) of highest value and each of the other signals (S1, S3, S4) are greater than the low reference value (δ) and at least one of the differences is less than the high reference value (Δ).
